# EUROPÄISCHE PATENTANMELDUNG

(11) **EP 2 229 913 A1**
(43) Veröffentlichungstag der Anmeldung: **22.09.2010**
(21) Anmeldenummer: 10002485.0
(22) Anmeldetag: 10.03.2010
(51) Int. Cl.: A61C 11/00

(54) **Vorrichtung zum Scannen eines in einem Artikulator angeordneten Dentalmodells**

(30) Priorität: 18.03.2009 AT 4312009
(71) Anmelder: STEGER, Heinrich, 39031 Bruneck (IT)
(72) Erfinder: STEGER, Heinrich, 39031 Bruneck (IT)
(74) Vertreter: Gangl, Markus

(57) **Zusammenfassung**

Vorrichtung zum Erstellen eines dreidimensionalen, rechnerisch verarbeitbaren, auf Scandaten (D) basierenden Abbilds (A) eines Dentalmodells (M) mit einem Scanner (S) und einer elektronischen Speichereinheit (E), wobei die durch den Scanner (S) in einem Scanbereich (Q) erfassten Scandaten (D) des Dentalmodells (M) signaltechnisch der elektronischen Speichereinheit (E) zuführbar sind, wobei die Vorrichtung einen Positionierbereich (P) aufweist, in welchem ein Kiefergelenksbewegungssimulationsgerät (K), vorzugsweise ein Artikulator, mit darin angeordneten Dentalmodellhälften (M_{X}, M_{Y}) des Dentalmodells (M) so anordenbar ist, dass das Kiefergelenksbewegungssimulationsgerät (K) zumindest bereichsweise in den Scanbereich (Q) des Scanners (S) aufnehmbar oder aufgenommen ist.

## Beschreibung

Die Erfindung betrifft eine Vorrichtung und ein Verfahren zum Erstellen eines dreidimensionalen, rechnerisch verarbeitbaren, auf Scandaten basierenden Abbilds eines Dentalmodells mit einem Scanner und einer elektronischen Speichereinheit, wobei die durch den Scanner in einem Scanbereich erfassten Scandaten des Dentalmodells signaltechnisch der elektronischen Speichereinheit zuführbar sind.

Derartige Vorrichtungen und Verfahren sind bereits aus dem Stand der Technik bekannt und dienen vornehmlich dazu, den Gebissabdruck eines Menschen bzw. ein bereits modifiziertes Gebissabdruckmodell, insbesondere dessen Oberflächenform, digital zu erfassen.

Schon seit einiger Zeit werden dazu die beiden modellierten Gebisshälften separat nacheinander abgescannt und dann die abgescannten Daten virtuell aneinander gefügt, sodass eine möglichst optimale Gebissstellung und ein aneinander passen der jeweiligen Gebisshälften entsprechend der Gebissstellung virtuell erzeugt wird.

Beispielsweise wird gemäß der DE 202 20 873 U1 gezeigt, wie die Kiefergelenksbewegung über einen sogenannten virtuellen Artikulator simuliert wird. Nachteilig dabei ist, dass nur virtuell das Aneinanderpassen der Gebisshälften simuliert wird, was durchaus im konkreten Anwendungsfall zu Problemen führen kann, da die rein virtuell simulierte Kiefergelenksbewegung oftmals nicht der eigentlichen Gebissstellung entspricht.

Die DE 103 01 958 B4 zeigt ein Verfahren zur Herstellung eines Dentalimplantates für ein intraorales Implantatiorisfeld. Im Wesentlichen zeigt diese Schrift die Überlagerung und Zuordnung von tomographisch erfassten Ortsmarkierungen zu einem Laborplanungsmodell anhand der tomographischen Referenz. Die Gebissstellung am Patienten wird dabei mittels einer Axiographie erfasst, was automatisiert durch einen Laserscanner durchgeführt werden kann.

Weiters zeigt die EP 1 406 555 ein Verfahren und eine Vorrichtung zur dreidimensionalen Vermessung und Digitalisierung eines Dentalmodells. Es wird gezeigt, dass ein Zahntechniker auch über das vorhandene Gipsmodell den Gegenbiss des anderen Kiefers berücksichtigen kann. Das gesamt Gipsmodell wird - während es sich dreht - in einem Vorgang durch einen Streifenscanner abgescannt.

Ein wesentliches Problem bei den Vorrichtungen und Verfahren aus dem Stand der Technik ist, dass die konkrete Raumwinkelstellung von zwei Gebisshälften zueinander nicht digital erfasst wird. Zudem fließt in einen rein virtuell erzeugten Artikulator nicht die Erfahrung eines geschulten Zahntechnikers beim aneinander Anpassen von Gebisshälften ein.

Die Aufgabe der Erfindung besteht nun darin, eine gegenüber dem Stand der Technik verbesserte Vorrichtung bzw. ein verbessertes Verfahren zum Erstellen von Dentalmodellabbildem anzugeben. Insbesondere soll ein Zahntechniker während des Digitalisiervorgangs des Dentalmodells die Möglichkeit haben, eine möglichst ideale Position von Gebisshäfften bzw. von Dentalmodellhälften zueinander zu erzeugen und diese abscannen zu lassen. Vorzugsweise soll weiteres ermöglicht werden, eine der Realität entsprechende Raumwinkeistellung der Gebisshälften zueinander zu erfassen. Bevorzugt sollen zudem die Möglichkeiten der bisher eingesetzten Scanner (Streifenlichtscanner) erweitert werden.

Dies wird dadurch erreicht, dass die Vorrichtung einen Positionierbereich aufweist, in welchem ein Kiefergelenksbewegungssimulationsgerät, vorzugsweise ein Artikulator, mit darin angeordneten Dentalmodellhälften des Dentalmodells so anordenbar ist, dass das Kiefergelenksbewegungssimulationsgerät zumindest bereichsweise in den Scanbereich des Scanners aufnehmbar oder aufgenommen ist. Dadurch wird nicht die bisherige rein virtuelle Positionierung der eingescannten Gebisshälften durchgeführt, sondern durch eine händische, durch die Erfahrung des Zahntechnikers idealere Positionierung der Gebisshälften zueinander ersetzt.

Der Positionierbereich ist definiert als Bereich, in dem der Artikulator angeordnet werden kann, sodass sich ein abzuscannendes Dentalmodell in einem Scanbereich des Scanners der Vorrichtung befindet. Der Scanbereich wiederum ist definiert als Raum, in welchem zumindest die für ein aneinander Anpassen von Gebisshälften relevanten Bereiche eines Dentalmodells von einem Scanner erfassbar sind. Somit sollen sich der Positionierbereich des Artikulators und der Scanbereich des Scanners zumindest in dem Bereich überschneiden, in welchem das Dentalmodell bzw, zumindest dessen relevante Bereiche anordenbar ist/sind.

Gemäß einer bevorzugten Ausführungsform der vorliegenden Erfindung kann vorgesehen sein, dass die Vorrichtung eine Antriebseinheit aufweist, die das Dentalmodell in Bezug auf den Scanner relativ bewegt. Einerseits kann diese Relativbewegung dadurch erfolgen, dass die Antriebseinheit eine Dentalmodellhälfte oder das aufnehmbare oder aufgenommene Kiefergelenksbewegungssimulationsgerät mit den beiden darin angeordneten Dentalmodellhälften des Dentalmodells im Scanbereich in Bezug auf den Scanner relativ bewegt oder andererseits, dass die Antriebseinheit den Scanner in Bezug auf eine Dentalmodeffhätfte oder in Bezug auf das Kiefergelenksbewegungssimulationsgerät relativ bewegt. Wesentlich ist, dass sich während des Scannens der Erfassungswinkel zwischen abgescanntem Dentalmodell und Scanner verändert.

Eine besonders bevorzugte Ausführungsform der vorliegenden Erfindung kann vorsehen, dass die Vorrichtung ein Gehäuse umfasst, in welchem zumindest der Scanner, der Scanbereich und der Positionierbereich angeordnet sind. Ein solches Gehäuse dient vor allem der Integration sämtlicher Bauteile in einer Vorrichtung.

Bevorzugt kann hierzu vorgesehen sein, dass das Kiefergelenksbewegungssimulationsgerät im Positionierbereich - vorzugsweise am Gehäuse über ein Positionierelement - derart befestigbar ist, dass die Dentalmodellhälften des Dentalmodells im Scanbereich des Scanners liegen.

Um eine lösbare Verbindung des Kiefergelenksbewegungssimulationsgeräts mit der Vorrichtung zu erreichen kann vorgesehen sein, dass das Kiefergelenksbewegungssimulationsgerät magnetisch am Gehäuse befestigbar ist. Andere lösbare Befestigungsarten, wie zum Beispiel eine lösbare Rastverbindung, sind natürlich auch einsetzbar.

Um die Digitalisierung und die Darstellung der Dentalmodelle für einen Bediener zu verbessern bzw. zu erleichtern, kann vorgesehen sein, dass die Scandaten der elektronischen Speichereinheit über einen Prozessor in aufbereiteter Form einem Bildschirm zuführbar und über diesen als Abbild des Dentalmodells darstellbar sind.

Die für das erfindungsgemäße Verfahren vorgesehenen Schritte, die auch in unterschiedlicher Reihenfolge durchgeführt werden können, sind:
- Scannen einer ersten Dentalmodellhälfte durch einen Scanner und Speichern der Scandaten in einer elektronischen Speichereinheit,
- Scannen einer zweiten Dentalmodellhälfte durch den Scanner und Speichern der Scandaten in der elektronischen Speichereinheit,
- vorzugsweise händisches Positionieren und Anpassen der ersten Dentalmodellhälfte und der zweiten Dentalmodellhälfte zueinander in einem Kiefergelenksbewegungssimulationsgerät, vorzugsweise in einem Artikulator,
- Scannen der beiden im Kiefergelenksbewegungssimulationsgerät aneinander angepasst angeordneten Dentalmodellhälften durch den Scanner und Speichern der Scandaten in der elektronischen Speichereinheit,
- Zusammenführen der Scandaten der ersten Dentalmodellhälfte, der Scandaten der zweiten Dentalmodellhälfte und der Scandaten der gemeinsam gescannten Dentalmodellhälften zu einem Abbild des Dentalmodells.

Die wesentliche Erleichterung und Verbesserung gegenüber dem Stand der Technik besteht dabei darin, dass nach (oder auch vor) der Detailscannung der beiden Gebisshälften ein Zahntechniker mittels seiner Erfahrung händisch die Gebisshälften zueinander anpassen bzw. positionieren kann und dann die dadurch entstehende Raumwinkelstellung der Gebisshälften zueinander nochmals abgescannt wird. Danach überlagert eine Software die Aufnahmen der im Artikulator angebrachten beiden Dentalmodellhälften mit den vorher angefertigten (oder auch nachher abgescannten) Gebisshälftendetalls zu einem einzigen Dentalmodellabbild, welches sowohl die genaue Oberflächenform der einzelnen Dentalmodellhälften wie auch deren Raumwinkelstellung zueinander enthält.

Gemäß einer bevorzugten Ausführungsform dieses erfindungsgemäßen Verfahrens kann vorgesehen sein, dass durch ein Rechenprogramm die Scandaten, die vorzugsweise jeweils einer Punktmenge entsprechen, zu einem Abbild des Dentalmodells rechnerisch zusammengeführt werden (gemeinsamer Scandatensatz). Jeder Punkt der abgescannten Oberfläche entspricht der kleinsten Auflösungseinheit des Scanners. Somit erhält man durch die Vielzahl der erfassten Punkte virtuell die Oberflächenform des abgescannten Objekts. Bevorzugt erkennt das Rechenprogramm (Software) ähnliche Muster in den Scandaten der beiden einzelnen Dentalmodellhälften im Vergleich mit den Scandaten der im Artikulator angeordneten Dentalmodellhälften, wodurch eine automatische, virtuelle Überlagerung dieser Bilder zu einem einzigen Dentalmodellabbild erfolgen kann.

Eine weitere bevorzugte Ausführungsform kann vorsehen, dass die einzelnen Scandaten und/oder das zusammengeführte Abbild des Datenmodells für einen Bediener ersichtlich auf einem Bildschirm dargestellt werden/wird. Es können somit die drei Einzelbilder/Scandaten am Bildschirm angezeigt werden und/oder auch das zusammengefügte Gesamtbild. Ein bevorzugtes Ausführungsbeispiel der vorliegenden Erfindung kann auch vorsehen, dass die Scandaten und/oder das Abbild des Datenmodells einer vorrichtungsintemen Speichereinheit oder einer extemen Speichereinheit zugeführt und in dieser gespeichert werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine schematische Darstellung eines Scanverfahrensablaufs,
- Fig. 2: eine perspektivische Ansicht einer Vorrichtung mit Artikulator,
- Fig. 3: eine Ansicht des im Gehäuse angeordneten Artikulators,
- Fig. 4: eine Ansicht gemäß Fig. 3 mit Gehäusetür und
- Fig. 5: einen Querschnitt durch die Vorrichtung gemäß Fig. 5.

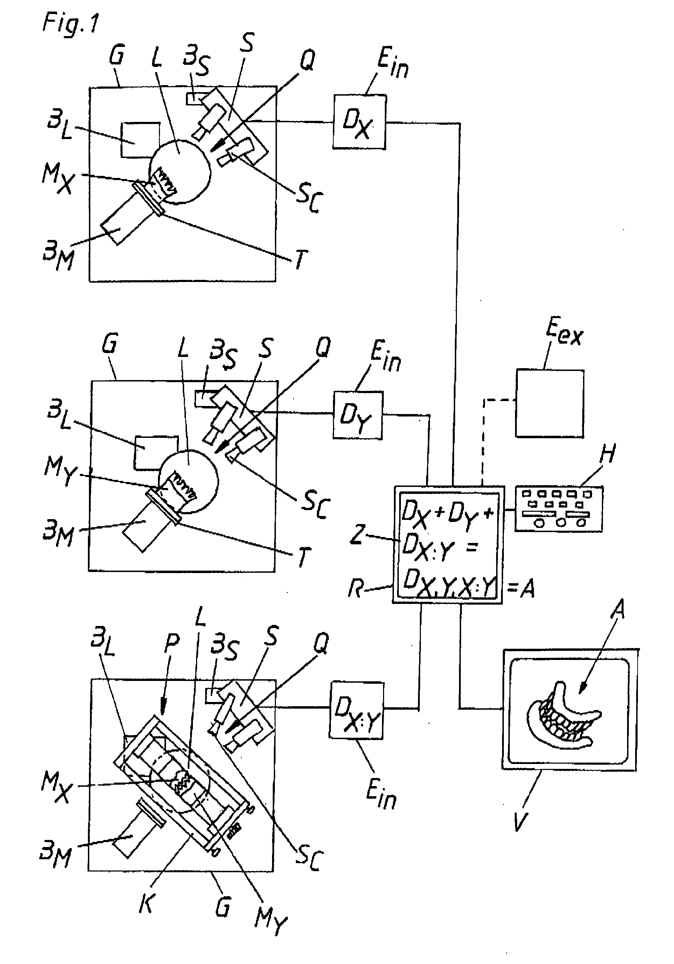

In Fig. 1 ist der schematische Ablauf eines Verfahrens zum Erstellen eines dreidimensionalen, rechnerisch verarbeitbaren, auf Scandaten D basierenden Abbilds A eines Dentalmodells M dargestellt. Im linken oberen Bereich ist dabei ersichtlich, wie ein erstes Dentalmodell M_{X} in einem Scanbereich Q angeordnet ist. Dieses Dentalmodell M_{X} wird dabei auf einer Aufspanneinrichtung, hier auf einer Befestigungsplatte T gehalten. Die gesamte Befestigungsplatte T ist dabei durch die Antriebseinheit B_{M} im Scanbereich Q relativ zum Scanner S bewegbar. Bevorzugt kann dabei das gesamte Dentalmodell M_{X} in sämtlichen Raumlagen und Raumebenen in Bezug auf den Scanner S bewegt werden, sodass die Oberflächenform des Dentalmodell M_{X} möglichst detailreich erfasst werden kann. Weiters sind auch die Antriebseinheiten B_{L} für die Positionierplatte L und B_{S} für den Scanner schematisch dargestellt. Die vom Scanner S erfassten Scandaten D_{X} werden im internen Speicher Eᵢₙ abgespeichert bzw. zwischengespeichert.

In einem nächsten Schritt des Verfahrensablaufes wird, wie in der Mitte links dargestellt, das Dentalmodell M_{Y} in gleicher Art und Weise wie das erste Dentalmodell M_{X} erfasst und die abgescannten Scandaten D_{Y} im Speicher Eᵢₙ gespeichert.

In weiterer Folge (links unten) wird das Kiefergelenksbewegungssimulationsgerät K (Artikulator) in einen Positionierbereich P der Vorrichtung gebracht bzw. gestellt. Bevorzugt wird der Artikulator K dabei am hier plattenförmigen Positionierelement L vorzugsweise magnetisch gehalten, wodurch die im Artikulator K angeordneten Dentalmodellhälften M_{X} und M_{Y} im Scanbereich Q des Scanners S aufgenommen sind. Während des Scannens bewegt sich dabei der gesamte Artikulator K bzw nur die Dentalmodellhälften M_{X} und M_{Y} derart, dass durch den Scanner S die Zahnstellung der Zähne zueinander erfassbar ist. Die so erfassten Scandaten D_{X:Y} werden dann wiederum in einem internen Speicher Eᵢₙ gespeichert.

Anschließend werden im Rechenprogramm R mit Hilfe des Prozessors Z die abgespeicherten und erfassten Scandaten D_{X}, D_{Y} und D_{X:Y} zusammengefasst und zu einem Scandatensatz D_{X, Y, X:Y} zusammengefügt, welches dann dem am Bildschirm V angezeigten Abbild A des Dentalmodells D entspricht. Sowohl die Einzeldaten D_{X}, D_{Y} und D_{X:Y} als auch die zusammengefügten Daten D_{X, Y. X:Y} können dann in einem internen Speicher Eᵢₙ oder auch in einem externen Speicher Eₑₓ aufbewahrt bzw. gespeichert werden. Schematisch ist auch noch die Bedieneinheit H dargestellt, welche dem Bediener ein Eingreifen in den ansonsten möglichst automatischen Zusammenführablauf der Scandaten D erlaubt.

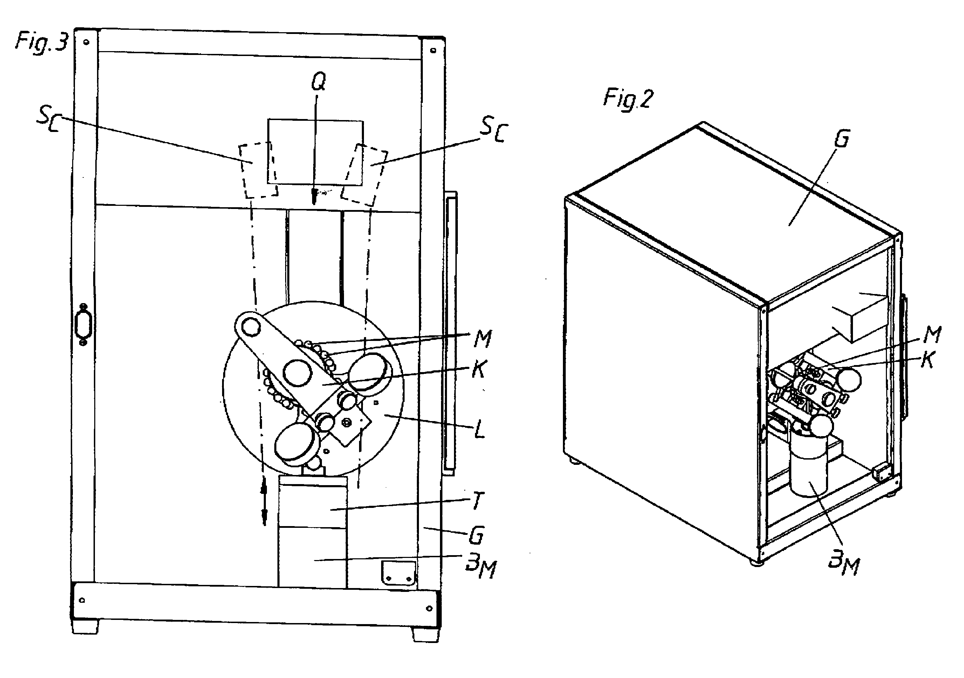

Fig. 2 zeigt eine perspektivische Ansicht des Gehäuses G der Vorrichtung, wobei der im Gehäuse G angeordnete Artikulator K mit dem hier schematisch als eine Vielzahl von Zylindern dargestellten Dentalmodellen M und der Antriebseinheit B_{M} zu erkennen ist.

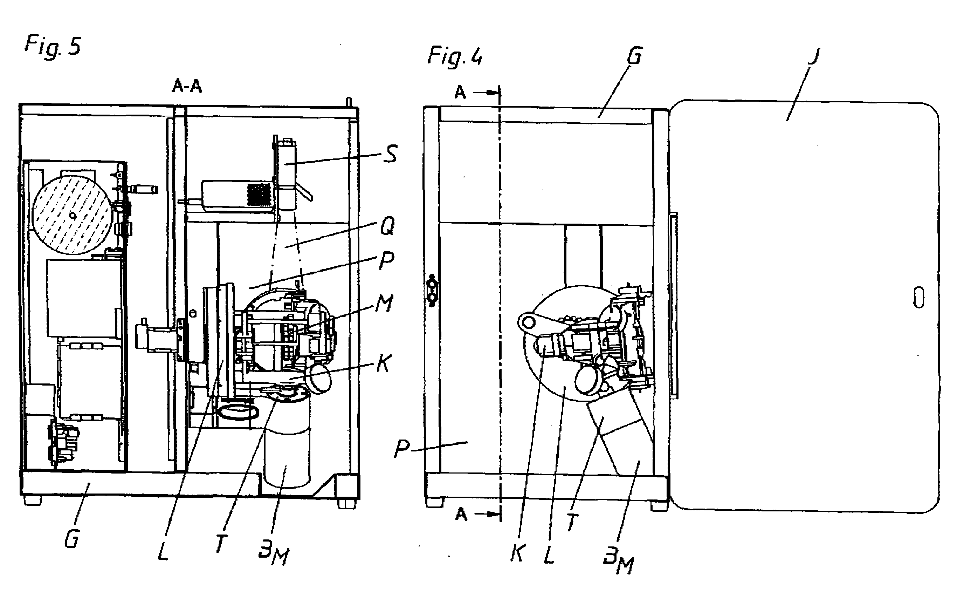

In Fig. 3 ist eine Ansicht der Scanvorrichtung gezeigt, wobei das Kiefergelenksbewegungssimulationsgerät K mit den darin wiederum schematisch als Zylinder gezeigten Dentalmodellen M an der Positionierplatte L angebracht ist. Strichliert sind in dieser Fig. 3 die beiden einzelnen Kameras S_{C} des hier eingesetzten Scanners S dargestellt, welche durch ihre Stellung zueinander den erfassbaren Scanbereich Q definieren (siehe auch die schematische Strichpunktierung in Fig. 5). Weiters ist in dieser Darstellung ersichtlich, dass die Befestigungsplatte T bei diesem Ausführungsbeispiel zweiteilig ausgeführt ist, wobei der obere Teil teleskopisch gegenüber dem anderen verschiebbar ist, was vor allem dann nützlich ist, wenn eine einzelne Dentalmodellhälfte M_{X} oder M_{Y} (ohne Artikulator K) im Scanbereich Q bewegt werden soll.

In Fig. 4 ist in ähnlicher Art und Weise wie in Fig. 3 das Gehäuse G mit dem darin befindlichen Artikulator K dargestellt, wobei zusätzlich die Gehäusetür J zu sehen ist.

Fig. 5 zeigt den Querschnitt A-A durch die Scanvorrichtung der Fig. 4. Dabei ist auch ein Querschnitt durch das Positionierelement bzw. durch die Positionierplatte L gezeigt, welche vorzugsweise magnetisch den gesamten Artikulator K mit dem darin anordenbaren Dentalmodell M im Positionierbereich P hält. Der Positionierbereich P ist dabei im Wesentlichen der gesamte, durch das Gehäuse G begrenzte Raum. Entsprechend ist im Gehäuse G der Positionierbereich P des Artikulators K und der Scanbereich Q des Scanners S vorgesehen bzw. dargestellt, in welchen die Dentalmodellhälften M_{X} und M_{Y} anordenbar sind.

Durch die hier vorliegende Erfindung ist somit eine verbesserte und vereinfachte Form des Erstellens eines Dentalmodellabbilds gezeigt, wobei vor allem das Positionieren eines Artikulators in einem Scanbereich dazu führt, dass die durch einen Fachmann im Artikulator festgelegte Idealposition von Dentalmodellhälften zueinander erfassbar ist und mit Detailscans der einzelnen Dentalmodelle zu einem einzigen, detaillierten, dreidimensionalen, speicherbaren Datenmodellabbild rechnerisch zusammenfügbar ist.

## Patentansprüche

1. Vorrichtung zum Erstellen eines dreidimensionalen, rechnerisch verarbeitbaren, auf Scandaten (D) basierenden Abbilds (A) eines Dentalmodells (M) mit einem Scanner (S) und einer elektronischen Speichereinheit (E), wobei die durch den Scanner (S) in einem Scanbereich (Q) erfassten Scandaten (D) des Dentalmodells (M) signaltechnisch der elektronischen Speichereinheit (E) zuführbar sind, **dadurch gekennzeichnet, dass** die Vorrichtung einen Positionierbereich (P) aufweist, in welchem ein Kiefergelenksbewegungssimulationsgerät (K), vorzugsweise ein Artikulator, mit darin angeordneten Dentalmodellhälften (M_{X}, M_{Y}) des Dentalmodells (M) so anordenbar ist, dass das Kiefergelenksbewegungssimulationsgerät (K) zumindest bereichsweise in den Scanbereich (Q) des Scanners (S) aufnehmbar oder aufgenommen ist.

2. Vorrichtung nach Anspruch 1, **dadurch gekennzeichnet, dass** die Vorrichtung eine Antriebseinheit (B) aufweist, durch welche das Dentalmodell (M) in Bezug auf den Scanner (S) relativ bewegbar ist.

3. Vorrichtung nach Anspruch 2, **dadurch gekennzeichnet, dass** durch die Antriebseinheit (B) eine Dentalmodellhälfte (M_{X}, M_{Y}) oder das aufnehmbare oder aufgenommene Kiefergelenksbewegungssimulationsgerät (K) mit den beiden darin angeordneten Dentalmodellhälfterl (M_{X}, M_{Y}) des Dentalmodells (M) im Scanbereich (Q) in Bezug auf den Scanner (S) relativ bewegbar ist.

4. Vorrichtung nach Anspruch 2, **dadurch gekennzeichnet, dass** durch die Antriebseinheit (B) den Scanner (S) in Bezug auf eine Dentalmodellhälfte (M_{X}, M_{Y}) oder in Bezug auf das Kiefergelenksbewegungssimulationsgerät (K) relativ bewegbar ist.

5. Vorrichtung nach einem der Ansprüche 1 bis 4, **dadurch gekennzeichnet, dass** die Vorrichtung ein Gehäuse (G) umfasst, in welchem zumindest der Scanner (S), der Scanbereich (Q) und der Positionierbereich (P) angeordnet sind.

6. Vorrichtung nach Anspruch 5, **dadurch gekennzeichnet, dass** das Kiefergelenksbewegungssimulationsgerät (K) im Positionierbereich (P) - vorzugsweise am Gehäuse (G) über ein Positionierelement (L) - derart befestigbar ist, dass die Dentalmodellhälften (M_{X}, M_{Y}) des Dentalmodells (M) im Scanbereich (Q) des Scanners (S) liegen.

7. Vorrichtung nach Anspruch 5 oder 6, **dadurch gekennzeichnet, dass** das Kiefergelenksbewegungssimulationsgerät (K) magnetisch am Gehäuse (G) befestigbar ist.

8. Vorrichtung nach einem der Ansprüche 1 bis 7, **dadurch gekennzeichnet, dass** die Scandaten (D) der elektronischen Speichereinheit (E) über einen Prozessor (Z) in aufbereiteter Form einem Bildschirm (V) zuführbar und über diesen als Abbild (A) des Dentalmodells (M) darstellbar sind.

9. Verfahren zum Erstellen eines dreidimensionalen, rechnerisch verarbeitbaren, auf Scandaten (D) basierenden Abbilds (A) eines Dentalmodells (M), insbesondere mit einer Vorrichtung nach einem der Ansprüche 1 bis 8, **gekennzeichnet durch** die Schritte:
- Scannen einer ersten Dentalmodellhälfte (M_{X}) **durch** einen Scanner (S) und Speichern der Scandaten (D_{X}) in einer elektronischen Speichereinheit (E),
- Scannen einer zweiten Dentalmodellhälfte (M_{Y}) **durch** den Scanner (S) und Speichern der Scandaten (D_{Y}) in der elektronischen Speichereinheit (E),
- vorzugsweise händisches Positionieren und Anpassen der ersten Dentalmodellhälfte (M_{X}) und der zweiten Dentalmodellhälfte (M_{Y}) zueinander in einem Kiefergelenksbewegungssimulationsgerät (K), vorzugsweise in einem Artikulator,
- Scannen der beiden im Kiefergelenksbewegungssimulationsgerät (K) aneinander angepasst angeordneten Dentalmodellhälften (M_{X}, M_{Y}) **durch** den Scanner (S) und Speichern der Scandaten (D_{X:Y}) in der elektronischen Speichereinheit (E),
- Zusammenführen der Scandaten (D_{X}) der ersten Dentalmodellhälfte (M_{X}), der Scandaten (D_{Y}) der zweiten Dentalmodellhälfte (M_{Y}) und der Scandaten (D_{X:Y}) der gemeinsam gescannten Dentalmodellhälften (M_{X}, M_{Y}) zu einem Abbild (A) des Dentalmodells (M).

10. Verfahren nach Anspruch 9, **dadurch gekennzeichnet, dass** durch ein Rechenprogramm (R) die Scandaten (D_{X}, D_{Y}, D_{X:Y}), die vorzugsweise jeweils einer Punktmenge entsprechen, zu einem Abbild (A) des Dentalmodells (D) rechnerisch zusammengeführt werden.

11. Verfahren nach Anspruch 9 oder 10, **dadurch gekennzeichnet, dass** die Scandaten (D_{X}. D_{Y}, D_{X:Y}) durch das Rechenprogramm (R) automatisch oder durch einen Bediener zusammengeführt werden.

12. Verfahren nach einem der Ansprüche 9 bis 11, **dadurch gekennzeichnet, dass** die einzelnen Scandaten (D_{X}, D_{Y}, D_{X:Y}) und/oder das zusammengeführte Abbild (A) des Datenmodells (M) für einen Bediener ersichtlich auf einem Bildschirm (V) dargestellt wird.

13. Verfahren nach einem der Ansprüche 9 bis 12, **dadurch gekennzeichnet, dass** die Scandaten (D_{X}, D_{Y}, D_{X:Y}) und/oder das Abbild (A) des Datenmodells (M) einer vorrichtungsintemen Speichereinheit (Eᵢₙₜ) oder einer externen Speichereinheit (Eₑₓ) zugeführt und in dieser gespeichert werden.
